# FASCICULE DE BREVET EUROPEEN

(11) **EP 1 773 108 B1**
(45) Date de publication et mention de la délivrance du brevet: **16.07.2008**
(21) Numéro de dépôt: 05784021.7
(22) Date de dépôt: 29.06.2005
(51) Int. Cl.: A01G 9/02

(54) **DISPOSITIF DE VÉGÉTALISATION MODULAIRE POUR FAÇADES, MURS OU ANALOGUES**
MODULARE GRÜNUNGSVORRICHTUNG FÜR FASSADEN, WÄNDE O. Ä.
MODULAR GREENING DEVICE FOR FAÇADES, WALLS OR THE LIKE

(30) Priorité: 30.06.2004 FR 0407247
(43) Date de publication de la demande: 18.04.2007
(60) Demande divisionnaire: 08010092.8
(73) Titulaire: SOPREMA, 67100 Strasbourg (FR)
(72) Inventeur: BINDSCHEDLER, Pierre, Etienne, F-67210 Obernai (FR); LASSALLE, François, F-67150 Erstein (FR)
(74) Mandataire: Nuss, Pierre
(86) Numéro de dépôt international: PCT/FR2005/001657
(87) Numéro de publication internationale: WO 2006/010860

(56) Documents cités:
- EP-A- 0 337 085
- EP-A- 0 393 735
- EP-A- 1 059 396
- WO-A-88/06400
- DE-U- 7 004 146
- DE-U1- 29 909 177
- US-A1- 2002 007 593

## Description

La présente invention concerne le domaine des bâtiments, des constructions d'ouvrages et du génie civil, plus particulièrement le revêtement extérieur et la décoration de telles constructions, et a pour objet un dispositif de végétalisation modulaire de façades, murs ou analogues.

De plus en plus fréquemment, lors de constructions nouvelles ou de réaménagements de constructions ou de sites existants, des demandes relatives à l'intégration de surfaces entièrement ou partiellement végétalisées sont formulées.

Différentes solutions sont connues, certaines plus anciennes, d'autres plus récentes.

Ainsi, les techniques traditionnelles consistent à planter au pied des murs des plantes grimpantes. Ce principe a été amélioré en Allemagne notamment, depuis une quinzaine d'années, avec la mise au point de systèmes d'ancrage, de fixations adaptées, respectant les contraintes liées au bâtiment.

Plus récemment, différents procédés ont été proposés qui permettent de végétaliser les murs en déployant sur ceux-ci un feutre épais garni ou non de poches, lesquelles sont remplies de substrat et plantées. Ces systèmes requièrent une irrigation et une fertilisation permanentes, l'eau ruisselant sur le mur en permanence est recueillie dans un bac et réinjectée en haut du système.

Enfin, d'autres techniques ont été mises au point pour réaliser des murs anti-bruit végétalisés.

Toutefois, les différentes solutions connues présentent toutes des inconvénients et/ou des limitations limitant leur application, compte tenu des contraintes (temps, soins, suivi, ...) qu'elles imposent, de leur manque de souplesse ou de leur complexité de construction, de mise en oeuvre ou de maintenance. En outre, aucune de ces techniques n'est adaptée à la végétalisation durable de parties verticales de bâtiments, particulièrement s'il s'agit de surfaces fractionnées ou de géométrie irrégulière, et nécessite toutes un démontage d'une partie constitutive importante en cas de remplacement, de traitement ou de modification locale de leur arrangement.

Ainsi, les plantes grimpantes prennent généralement longtemps à s'installer, puis se développent souvent de façon excessive. Elles peuvent poser des problèmes sur les revêtements extérieurs des bâtiments (effritement du crépi, humidité permanente, ...), et d'une façon générale sont plutôt difficiles à maîtriser.

Les systèmes mettant en oeuvre un feutre ou une nappe analogue présentent également différents inconvénients.

En effet, du fait d'une capacité de rétention en eau très faible, ils nécessitent une humidification permanente réalisée directement au contact du mur (ce qui peut être préjudiciable au bâtiment), ainsi que la récolte de l'eau au bas du système (en principe réinjectée en partie haute). De par leur conception, ils ne peuvent être utilisés que sur la hauteur totale d'un mur, lui-même dépourvu de toute ouverture. Dans un but décoratif, la végétation employée développe une surface foliaire importante (plantes vigoureuses), très consommatrice d'eau, cette végétation étant très sensible à une éventuelle rupture de l'alimentation en eau.

Enfin, les techniques de murs anti-bruit végétalisés évoquées précédemment ont toutes en commun deux aspects rédhibitoires dans le contexte de la végétalisation de façades ou de murs, notamment en hauteur, à savoir : les éléments constitutifs, éventuellement sous forme de plaques modulaires montées sur une structure porteuse, sont lourds et épais (donc difficiles à manipuler) et doivent toujours être posés au sol.

On connait du document EP-A-1059396 un tel technique.

La présente invention a pour but de pallier au moins les principaux inconvénients précités des systèmes existants.

A cet effet, l'invention a pour objet un dispositif de végétalisation de façades ou de murs selon la revendication 1.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
La figure 1 est une vue en perspective d'un module d'un dispositif de végétalisation selon l'invention ;
La figure 2A est une vue en perspective d'un bac faisant partie d'un module selon l'invention ;
Les figures 2B et 2C sont des vues, à une échelle différente, respectivement en coupe horizontale (selon A-A parallèlement aux parois supérieure et inférieure) et en élévation latérale du bac représenté sur la figure 2A ;
La figure 3 est une vue similaire à celle de la figure 1, le module étant vide ;
Les figures 4A et 4B sont des vues partielles en coupe verticale d'un dispositif de végétalisation selon l'invention, respectivement avec des modules remplis de substrat et portant des plantes (figure 4A) et avec des modules vides (figure 4B - représentés sans substrat pour une meilleure illustration du mode de montage) ;
La figure 5 est une vue partielle en coupe horizontale et de dessus d'un dispositif de végétalisation, les modules étant dépourvus de substrat et de plantes pour une meilleure illustration ;
La figure 6 est une vue partielle en élévation latérale d'un profilé de verrouillage des modules à l'état monté représenté sur la figure 5 ;
La figure 7 est une vue partielle et en élévation frontale d'un dispositif de végétalisation selon l'invention, le substrat et les plantes n'étant pas apparentes ;
La figure 8 est une vue partielle de détail et en perspective d'une variante de réalisation d'un rail d'accrochage faisant partie de la structure porteuse du dispositif de végétalisation selon l'invention ;
Les figures 9A et 9B sont des vues similaires à celle de la figure 8 illustrant deux variantes de fixation d'un rail d'accrochage (les découpes n'étant pas représentées) ;
La figure 10 est une représentation en élévation frontale d'un dispositif de végétalisation selon l'invention formé de neuf modules, cette représentation illustrant schématiquement le réseau d'irrigation faisant partie dudit dispositif et le cheminement et l'écoulement du liquide d'irrigation ;
La figure 11 est une vue partielle identique à celle de la figure 7, le substrat, la partie locale du réseau d'irrigation et l'écoulement de l'eau étant représentés en plus ;
La figure 12 est une vue partielle et en élévation frontale de la partie inférieure d'un dispositif de végétalisation selon l'invention, et,
La figure 13 est une vue en coupe selon B-B de l'objet de la figure 12.

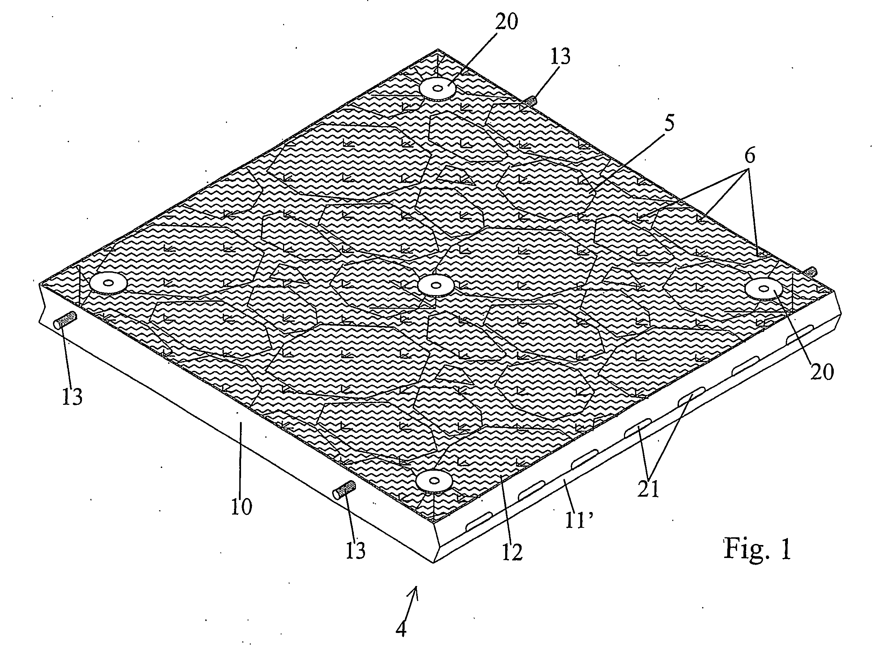

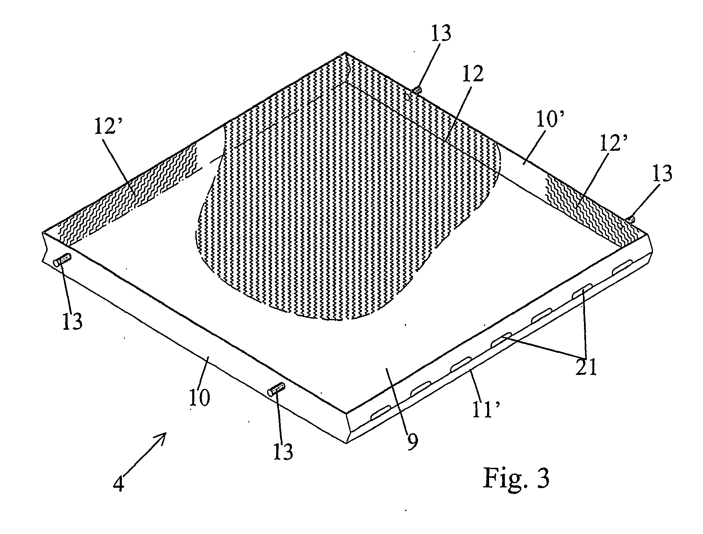

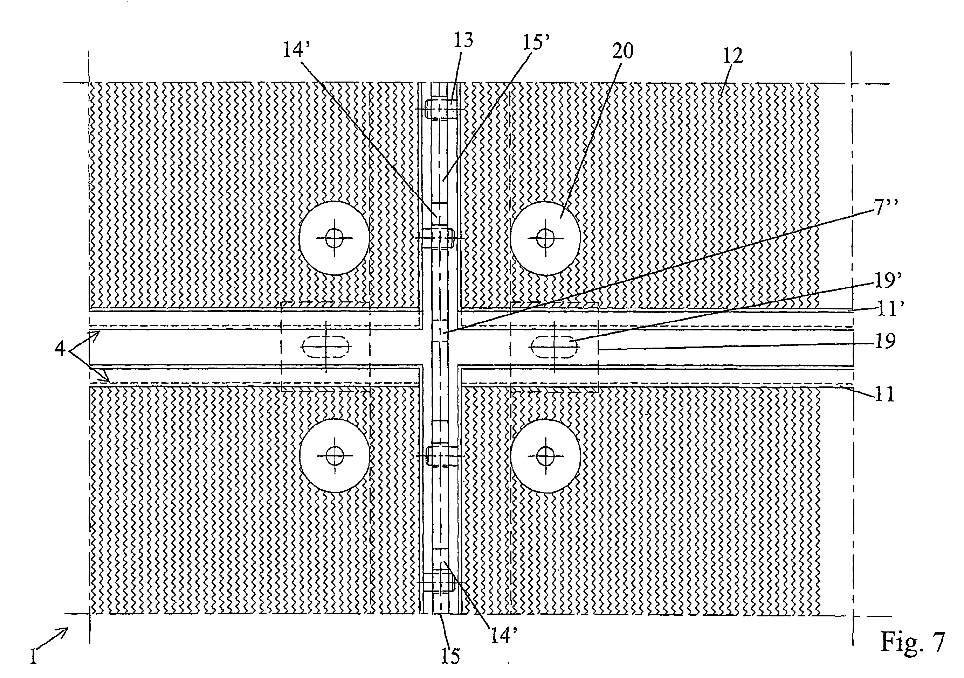

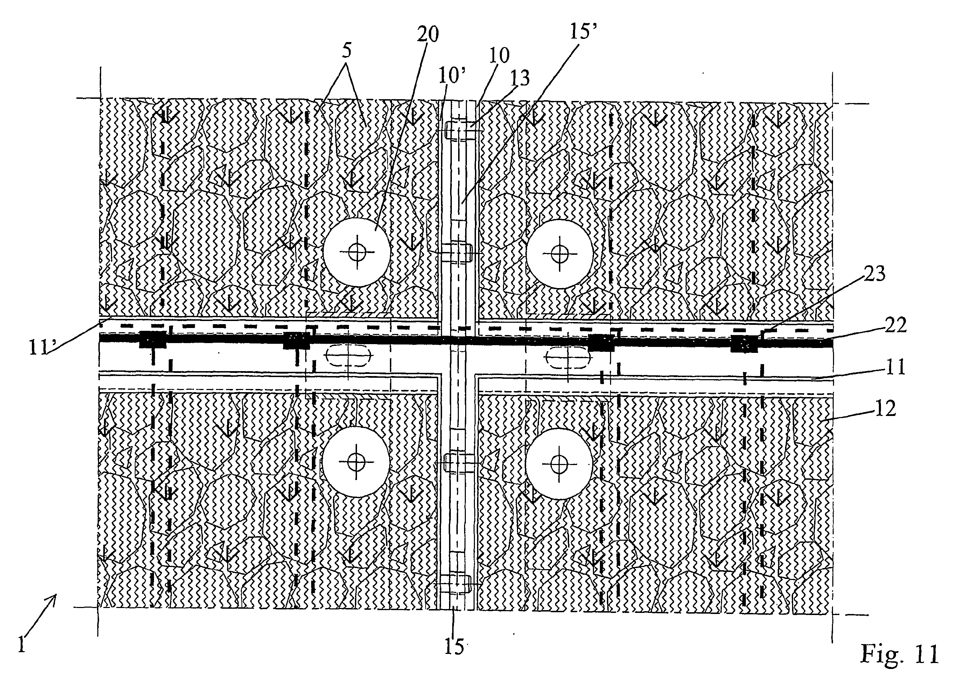

Les figures 1 à 5, 7, 10 et 11 montrent un dispositif 1 de végétalisation de façades ou de murs 2, principalement constitué, d'une part, par une structure porteuse 7, 19 fixée sur la face 3 de la façade ou du mur 2 à recouvrir, partiellement ou totalement, d'autre part, par au moins deux, préférentiellement une pluralité, de modules 4 à structure plate et à contour carré ou rectangulaire, contenant un substrat de culture 5 et présentant sur l'une de ses grandes faces (face apparente des modules) des éléments de végétation 6 apparents, ces modules étant montés de manière amovible sur ladite structure porteuse en masquant sensiblement cette dernière.

Conformément à l'invention, la structure porteuse consiste essentiellement en au moins deux rails verticaux 7 espacés sur lesquels les modules 4 sont montés en rangées verticales en étant situés à distance de la façade ou du mur 2 et en étant démontables individuellement.

Chaque module 4 se présente sous la forme d'un bac 8 de constitution générale plate, de forme parallélépipédique, de faible épaisseur par rapport à ses dimensions latérales et avec une paroi de fond 9 et des parois latérales 10, 10', 11, 11' sensiblement pleines.

La face ouverte du bac 8, qui est opposée au fond 9, est fermée par une paroi ajourée 12 retenant le substrat 5 et autorisant le passage des éléments de végétation 6 et les parois latérales opposées 10 et 10', orientées verticalement après montage, de chaque bac 8 sont pourvues d'éléments d'accrochage 13 destinés à coopérer avec des sites de réception (14) adaptés présents sur les rails de montage 7.

Dans la présente, les directions verticale et horizontale doivent être comprises comme étant définies par rapport au dispositif 1 monté et fixé.

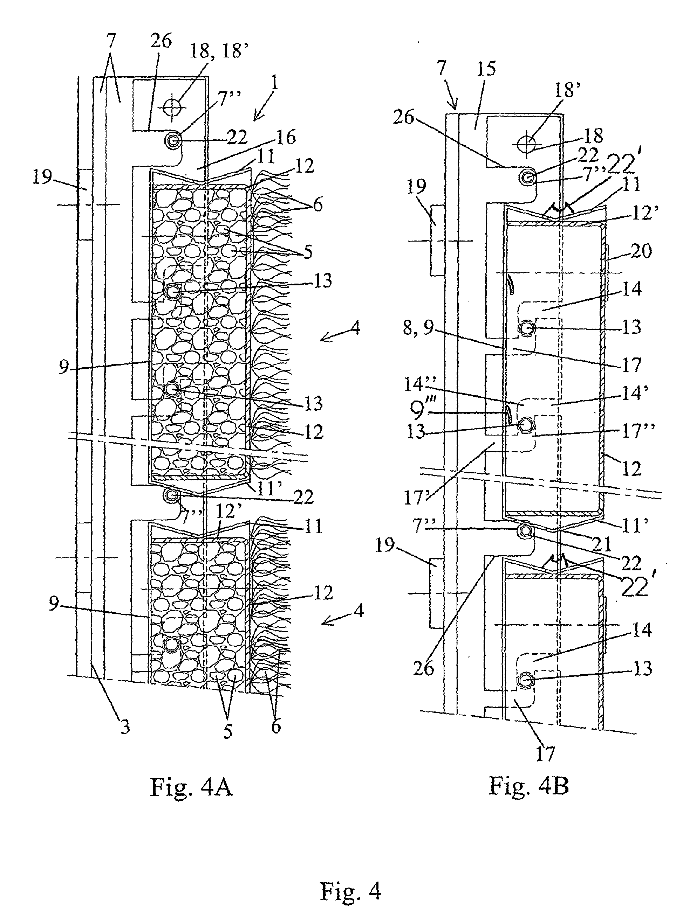

Comme le montrent notamment les figures 4A, 4B, 5, 7, 10 et 11 des dessins annexés, le dispositif de végétalisation 1 comprend généralement une pluralité de modules 4, agencés en une ou plusieurs rangée(s) verticale(s) et une ou plusieurs rangée(s) horizontale(s).

Selon une première caractéristique de l'invention, ressortant notamment des figures précitées, les éléments d'accrochage 13 consistent en des goujons ou des doigts rapportés ou formés sur les parois latérales 10 et 10' concernées et les rails verticaux 7 consistent en des profilés comportant une aile 15 pourvue de découpes 14 formant les sites de réception, ces découpes 14 étant débouchantes au niveau de l'arête libre 15' de ladite aile 15 et définissant une position de montage calée sous faction de la pesanteur pour lesdits modules 4 en position montée.

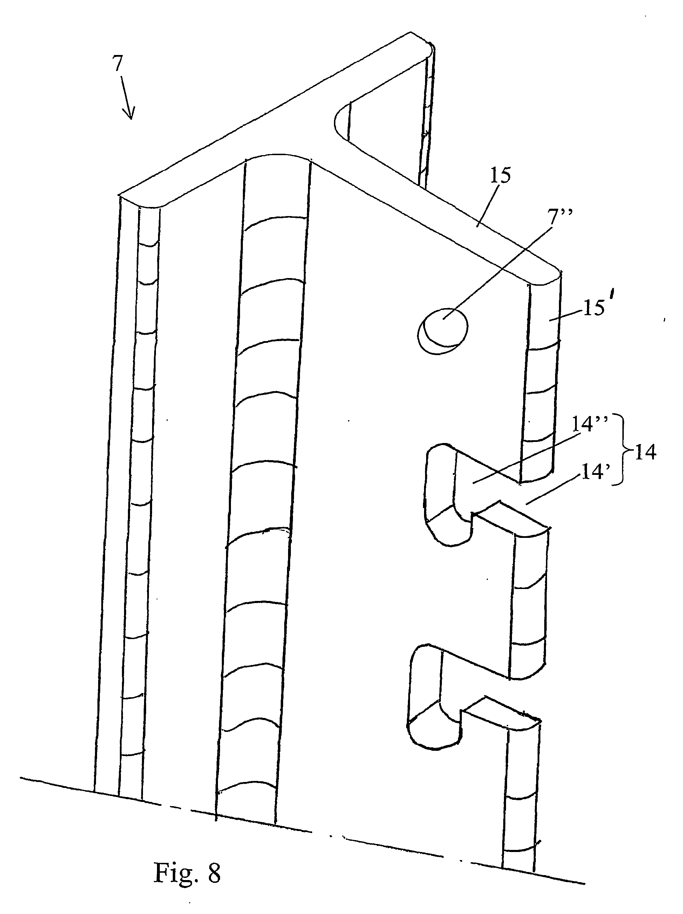

Préférentiellement, chaque découpe 14 présente sensiblement une forme de L, avec un segment 14' débouchant de ladite découpe 14 orienté sensiblement horizontalement et avec l'autre segment 14" borgne orienté sensiblement verticalement vers le bas, après fixation du rail 7 considéré sur la façade ou le mur 2. De plus, les goujons ou doigts 13 des deux parois latérales opposées 10 et 10' de chaque bac 8 sont mutuellement décalés dans la direction verticale, considérée en position de montage des modules 4, chaque rail 7 comportant des sites 14 pour la réception des goujons ou doigts 13 de deux rangées verticales adjacentes de modules 4 (figure 8).

Les modules 4 sont par conséquent chacun montés par accrochage entre deux rails 7 verticaux parallèles, en étant écartés latéralement d'une distance minimale pour assurer une continuité apparente de l'aspect végétalisé et pouvoir couvrir les interstices entre modules (et donc la structure porteuse) par les plantes ou éléments de végétation 6 analogues portés par les modules 4. Chaque rail 7 sert au support de deux rangées verticales de modules 4.

Ainsi, les goujons ou doigts 13 des deux modules 4 en regard, de même niveau et adjacents peuvent s'étendre chacun dans une découpe 14 correspondante du rail 7 situé entre eux. Il est ainsi possible, du fait de la non coïncidence de leurs goujons ou doigts 13, de rapprocher latéralement deux modules adjacents jusqu'à une distance juste légèrement supérieure à la longueur desdits goujons ou doigts 13, préférentiellement au nombre de deux par paroi 10, 10's (figures 1, 2A, 7 et 11).

Il convient de noter que d'autres formes de découpes procurant une position de calage sont également possibles, la forme en L étant quant à elle très simple à réaliser.

De manière avantageuse et comme cela ressort des figures 4A, 4B, 5 et 13, chaque rail 7 consiste en un profilé en L ou en T et les dispositions relatives, d'une part, des goujons ou doigts 13 au niveau des parois 10, 10' et, d'autre part, des découpes 14 au niveau des ailes 15 d'accrochage des rails 7, sont telles que les arêtes libres 15' desdites ailes 15 sont situées en retrait par rapport à la face frontale apparente des modules 4 après leur montage.

Afin d'empêcher un décrochement non autorisé ou accidentel d'un module 4, il peut être prévu que le dispositif de végétalisation comprenne, au niveau de chaque rail 7, un moyen de verrouillage à l'état monté des modules 4 sous la forme d'un profilé 16, par exemple un fer plat ou un profilé en U, pourvu de découpes 17 coïncidant respectivement avec celles 14 desdits rails 7, permettant d'engager les goujons ou ergots 13 des modules 4 dans leur état monté et pouvant bloquer ces derniers en position de montage calée (figures 4, 5 et 6).

Lorsque les goujons ou doigts 13 présentent une longueur suffisante pour traverser complètement et s'étendre au-delà du coté opposé de l'aile 15, un simple profilé plat peut suffire.

Selon un mode de réalisation préféré, les découpes 17 de chaque profilé de verrouillage 16 présentent une forme en L, avec un segment débouchant 17' orienté sensiblement horizontalement et avec l'autre segment 17" borgne orienté sensiblement verticalement vers le haut, lorsque ledit profilé 16 est en position montée sur un rail 7, chaque profilé de verrouillage 7 comportant en outre, préférentiellement au niveau de son extrémité supérieure, un perçage 18 pour le passage d'une tige ou barre 18' de blocage en translation, cette dernière traversant également des perforations correspondantes ménagées dans les rails d'accrochage 7.

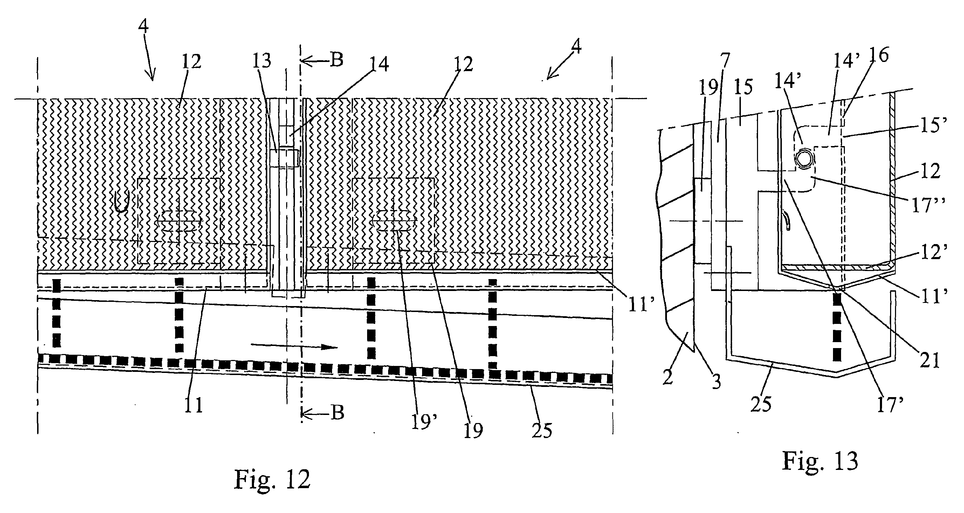

Ainsi, lesdits profilés 16 peuvent être bloqués de manière amovible dans leur position de verrouillage, lorsque les goujons, doigts ou ergots 13 sont pincés par cisaillement par coopération des fonds des segments borgnes 17" des découpes 17 desdits profilés 16 avec les fonds des segments borgnes 14" des découpes 14 des ailes 15 des rails (voir figures 4B et 13).

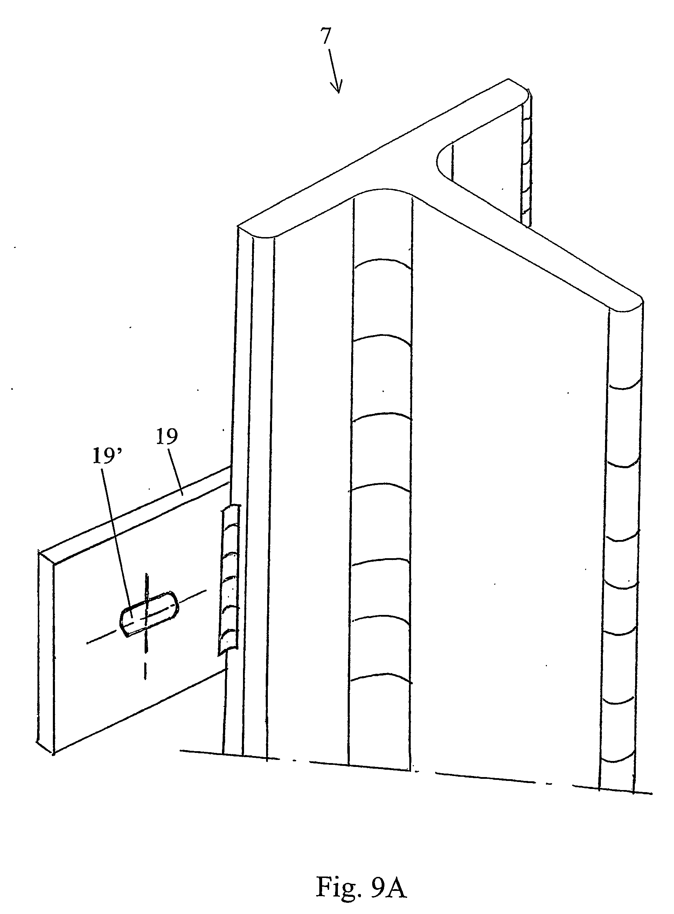

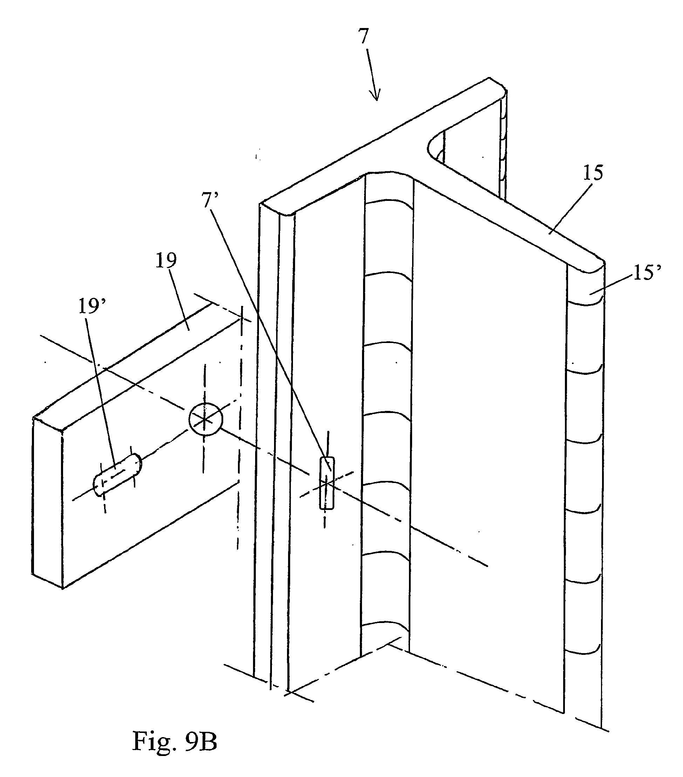

Conformément à deux variantes de réalisation préférées représentées aux figures 9A et 9B des dessins annexés, chaque rail 7 est fixé sur la face 3 de la façade ou du mur 2 à recouvrir par l'intermédiaire d'au moins deux plaquettes 19 comportant des orifices traversants oblongs 19' orientés selon la direction horizontale, le rail 7 étant solidarisé avec lesdites plaquettes 19 par soudage ou par vissage ou boulonnage, dans ce dernier cas les vis ou boulons peuvent être disposé(e)s dans des trous oblongs 7' orientés verticalement et ménagés dans ledit rail 7.

Ainsi, il est possible de régler l'écartement entre rails 7 (trous oblongs 19') et éventuellement la position verticale des rails 7 (trous oblongs 7').

En accord avec un premier mode de réalisation, les bacs plats 8 consistent en des bacs en matière plastique venus de moulage éventuellement de la matière plastique renforcée, au moins une nervure ou paroi de séparation analogue 9' étant formée ou rapportée sur leur paroi de fond 9, en subdivisant ainsi les volumes intérieurs desdits bacs 8 en deux compartiments dans la direction horizontale (définie pour lesdits bacs 8 après montage des modules 4 sur les rails verticaux 7).

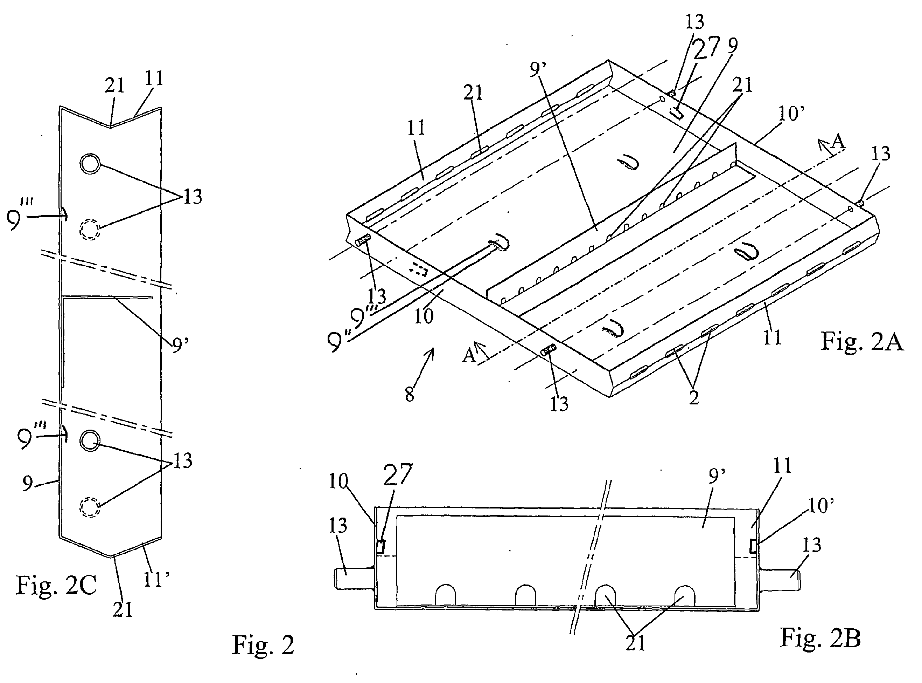

En accord avec un second mode de réalisation, les bacs 8 à configuration plate consistent en des bacs métalliques formés d'un seul tenant à partir de portions de tôle galvanisée découpées, pliées et assemblées par soudage au niveau des arêtes de jonction des parois latérales 10, 10', 11, 11', au moins une nervure ou paroi de séparation analogue 9' étant formée ou rapportée sur leur paroi de fond 9, en subdivisant ainsi les volumes intérieurs desdits bacs 8 en deux compartiments dans la direction horizontale (figures 2A et 2B).

Selon un troisième mode de réalisation, il peut être prévu que les bacs 8 soient réalisés en matière plastique renforcée ou non et que ces bacs soient entourés d'un cadre métallique portant les éléments d'accrochage 13 (non représenté).

Préférentiellement et comme le montrent les figures 1, 3, 4, 5 et 7 des dessins annexés, la paroi ajourée 12 présente une constitution grillagée, par exemple réalisée en métal déployé, et comporte au moins deux bords latéraux 12' pliés situés en regard et à proximité immédiate des faces internes des bords latéraux verticaux 10 et 10' du bac concerné 8.

Ladite paroi 12 est, par exemple, assemblée avec ledit bac 8 au moyen de plaquettes ou de rondelles 20 coopérant avec des vis de fixation solidaire de la paroi de fond 9 dudit bac 8. La paroi 12 pourra également présenter quatre bords 12' pliés, un au niveau de chacun de ses côtés.

Afin d'autoriser et de favoriser l'irrigation par écoulement vertical, les parois latérales opposées supérieure 11 et inférieure 11' des bacs 8, orientées horizontalement après montage des modules 4, présentent respectivement de profil ou en section transversale une forme concave et une forme convexe vues de l'extérieur, ces formes étant arrondies ou angulaires et ces parois 11 et 11' et, le cas échéant, la ou les nervures ou parois de séparation 9' comportant des perforations 21 pour le passage de liquide.

Les perforations 21 des parois 11 et 11' seront avantageusement situées au fond de la section concave ou convexe, par exemple en forme de chevron.

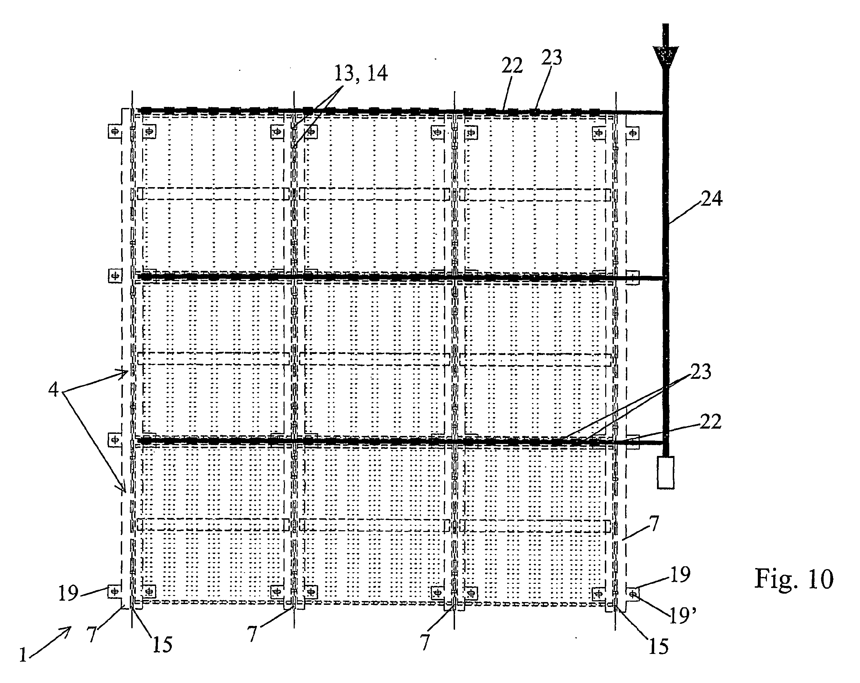

Selon une caractéristique additionnelle importante de l'invention ressortant notamment des figures 10 à 13, le dispositif 1 peut comprendre également un réseau d'irrigation comprenant une pluralité de portions de conduit 22 horizontales associées chacune à une rangée horizontale de modules 4 et comportant pour chaque module 4 un ou plusieurs orifices calibrés de déversement ou un ou plusieurs goutteurs 23, répartis longitudinalement le long de la portion considérée.

Ces portions de conduit horizontales 22 sont soit alimentées par un conduit principal 24 à extension verticale et relié à eux, soit intégrées dans un conduit unique d'un seul tenant.

Une gouttière ou un moyen de récupération allongé analogue 25 s'étend, le cas échéant, sous l'extrémité inférieure de la dernière rangée horizontale de modules 4.

Selon une première variante de réalisation non représentée, les portions de conduit horizontales 22 sont logées, préférentiellement de manière amovible, dans des renfoncements profilés horizontaux ménagés dans la paroi de fond des bacs, à proximité de l'extrémité supérieure des modules 4.

Selon une seconde variante de réalisation représentée aux figures précitées, les portions de conduit horizontales 22 s'étendent chacune au-dessus des parois latérales supérieures 11 d'une rangée horizontale de modules 4, en étant supportées dans des orifices traversants 7" ménagés dans les rails d'accrochage verticaux 7.

Comme le montrent les figures 12 et 13, la gouttière inférieure de récupération sera inclinée vers un côté latéral du dispositif 1 en vue de l'écoulement naturel du liquide d'irrigation ayant ruisselé le long des modules 4.

Comme le montrent également ces figures, la gouttière 25 peut avantageusement présenter une section transversale en U, avec un fond pourvu d'une ligne d'inflexion longitudinale formant point bas. Cette gouttière 25 est fixée sur les extrémités inférieures des rails 7 avant la mise en place des modules 4 et présente une forme discrète, en étant pratiquement jointive et affleurante avec la rangée inférieure de modules 4.

Afin de fournir des modules 4 légers et faciles à manipuler et de limiter les contraintes d'irrigation, le substrat 5 est essentiellement constitué de granulats en matériau expansé et/ou poreux et à forte rétention hydrique et la végétation 6 est de type tapissante et à faible consommation d'eau.

Plus précisément, le substrat peut être à base de granulats minéraux poreux légers à ultra-légers, voire volatiles, exploités en une courbe granulométrique régulière et fine (0 à 10 mm), d'une part de matière organique, d'amendements et d'éléments fertilisants de longue durée. Ces caractéristiques offrent une capacité de rétention en eau de longue durée (eau piégée dans un réseau capillaire fin) et une aération constante du milieu de culture. Elles réduisent les risques de pertes en volume et ne sont pas affectées par le temps (contrairement aux supports de culture à dominante organique).

En ce qui concerne les éléments de végétation 6, ceux-ci peuvent être sélectionnés de façon primaire dans la gamme des végétaux ayant fait leurs preuves en "végétalisation extensive de toitures" (plantes vivaces xérophiles couvre-sol), et de façon secondaire dans celle des plantes indigènes couvrant naturellement les murs (plantes dites "de fissures de roches", également vivaces). Une adaptation sévère est faite vis-à-vis de l'exposition (soleil, mi-ombre, ombre), caractéristique indispensable à la pérennité de la végétation dans les situations du dispositif.

La végétation fait l'objet d'une préculture de plusieurs mois. L'utilisation de rouleaux de végétation précultivés sur armature est également une option que peut utiliser le dispositif.

On comprend de ce qui précède que l'installation d'un dispositif de végétalisation 1 s'effectue normalement de la manière suivante sur une face plane 3 d'une façade ou d'un mur 2 :
- fixation avec réglage des plaquettes 19 sur la façade ou le mur 2, puis fixation avec réglage des rails 7 sur lesdites plaquettes 19 (en variante fixation avec réglage des rails 7 par l'intermédiaire des plaquettes 19 soudées sur eux) ;
- installation du réseau d'irrigation 22, 23, 24 et de la gouttière 25 ;
- accrochage des différents modules 4 en introduisant les doigts ou goujons 13 dans les segments 14' des découpes 14 des rails 7 et en les poussant jusqu'à ce qu'ils soient calés au fond des segments 14" consécutifs ;
- mise en place des différents profilés de verrouillage 16 en les positionnant avec les entrées des segments débouchants 17' des découpes 17 en faces des ergots ou doigts 13 des modules 4 déjà accrochés, puis en effectuant un mouvement de translation horizontal suivi d'un mouvement de translation vertical vers le bas jusqu'à ce que lesdits ergots ou doigts 13 soient calés au fond des segments 17" des découpes 17 desdits profilés 16 ;
- mise en place de la tige de blocage traversante 18'.

Les profilés de verrouillage 16 comporteront également des échancrures ou découpes 26 autorisant le passage des portions de conduit 22 et permettant le déplacement de ces profilés 16 sans interférer avec lesdites portions de conduit 22.

Comme cela ressort des dessins annexés et de ce qui précède, le dispositif 1 de végétalisation selon l'invention peut être, à titre d'exemple, principalement constitué d'éléments modulaires 4 de faible épaisseur et de poids unitaire faible, assemblés sur une structure porteuse 7, 19 masquée. Les modules 4 sont démontables et capables de fonctionner de façon autonome, ce qui peut permettre de réaliser des "taches vertes" isolément sur un mur 2, ou de commencer la végétalisation verticale à partir d'une hauteur inaccessible aux dégradations.

Ces modules présentent une végétation tapissante, homogène ou dans une certaine mesure "paysagée". Le dispositif 1 intègre avantageusement une alimentation directe en eau au niveau de chaque module 4. La maintenance se limite à un apport d'eau séquentiel et espacé dans le temps, qui est optimisé par l'utilisation d'un substrat spécifique et d'une végétation peu consommatrice d'eau. Une lame d'air de plusieurs centimètres ménagée entre les modules 4 et le mur 2 assure une aération et une efficacité thermique pour la construction. La modularité permet également d'installer un autre type de revêtement localement (bois, métal ou autre) en lieu et place d'un ou de plusieurs modules 4 végétalisés.

Préférentiellement, les modules 4 sont des bacs plats (épaisseur inférieure à 8 cm, préférentiellement comprise entre 4 à 8 cm), de dimensions qui les rendent facilement manipulables (60 x 60 cm ou davantage) et en particulier par un ou deux installateur(s). Leur structure interne permet de fractionner l'éventuel tassement du substrat 5 qui y sera déposé. Le fond 9 et les parois latérales 10, 10', 11, 11' du bac sont pleins. Le dessus du bac présente un maillage 12 (peut-être du métal déployé) de section appropriée pour retenir le substrat 5 mais laisser passer les plantes 6.

Le matériau constitutif des modules 4 peut être du plastique résistant et ces modules être fabriqués par thermoformage et comporter des reliefs formant cloisonnement.

En variante, le matériau constitutif des modules peut être du métal galvanisé. Les parois haute 11 et basse 11' présentent un profil respectivement "concave" et "convexe" et sont perforées, de façon à laisser l'eau circuler, et un cloisonnement efficace est réalisé par des lames métalliques horizontales ajourées 9'. La résistance du matériau permet d'y fixer latéralement des manchons ou goujons métalliques 13 permettant l'accrochage des bacs aux rails 7 de la structure porteuse.

Le substrat granulaire 5 est très léger et essentiellement minéral (matières expansées notamment). Sa courbe granulométrique et sa faible teneur en matière organique excluent un tassement sur le long terme qui pourrait être préjudiciable à la végétation ou à l'effet esthétique d'ensemble (ce contrairement à un substrat du type laine de roche).

Les plantes 6 sont choisies parmi les plus résistantes à la sécheresse, et aussi après observation de celles poussant spontanément sur les murs (en partie verticale), dont notamment les plantes succulentes. Leur choix tient compte de l'exposition des faces qui, à la verticale, est nécessairement tranchée.

La distribution du liquide d'irrigation est effectuée par une gaine ou portions de conduit 22 à goutteurs 23 intégrés de 8 mm de diamètre, répartis tous les 15 cm. Le réseau est asservi à une programmation automatique et peut comprendre éventuellement un recyclage du liquide d'irrigation, éventuellement associé à un traitement.

Pour chaque module 4, cette gaine peut être insérée dans un profil spécial du fond du bac 8, restant accessible de l'extérieur, mais irriguant l'intérieur. L'alimentation en eau se fait de haut en bas pour chaque rangée verticale. Les eaux excédentaires s'écoulent au sol.

En variante, cette gaine peut être insérée au-dessus de chaque niveau horizontal dans des trous 7" pratiqués dans la structure porteuse. L'eau entre dans les bacs grâce au profil concave des bords hauts, et est canalisée vers le bac inférieur par le profil convexe des bords bas. En partie basse de la construction, les bacs 8 sont pourvus d'une lame métallique située à 20 mm du bord bas, celui-ci formant alors gouttière canalisant les eaux excédentaires vers les exutoires locaux après raccordement des bacs les uns aux autres (variante par rapport à une gouttière unique inférieure recueillant les ruissellements de tous les bacs). En cas d'absence de besoin permanent d'irrigation sur un ou plusieurs bacs (présence d'ouvertures dans la paroi d'accrochage, choix localisé d'un autre revêtement), les goutteurs peuvent être neutralisés individuellement à la mise en oeuvre ou ultérieurement.

La structure porteuse est constituée de rails verticaux 7 spécifiques de la largeur des bacs, ces rails étant fixés sur la paroi 2 à recouvrir.

Les rails utilisent des profils métalliques en T, comportant des encoches permettant l'accrochage, le décrochage et le blocage des modules. Les modules sont avantageusement démontables individuellement.

Des caractéristiques additionnelles peuvent être prévues au niveau des modules 4, comme indiqué ci-après.

Ainsi, la paroi de fond 9 de chaque module 4, ou au moins de certains modules 4, peut être perforée et comporter des ouvertures 9" espacées.

Ces dernières permettent, d'une part, en position horizontale du module 4 (durant la phase de préculture), une évacuation du trop-plein de liquide nourricier ou d'eau d'arrosage et, d'autre part, une aération du substrat 5 en position verticale dudit module 4 (lorsque ce dernier est installé sur la structure porteuse).

Les ouvertures 9" peuvent avantageusement se présenter sous forme de crevées ou découpes ménagées dans la paroi 9 et définissant des languettes 9"' s'étendant à distance de la face interne de ladite paroi 9 (fig. 2C, 2A, 4B). Ainsi, le liquide d'irrigation pourra s'écouler normalement à travers les ouvertures 9" en position horizontale du module 4, alors qu'il aura tendance à s'écouler sur les languettes 9"' et par-dessus les ouvertures 9" lorsque le module est en position sensiblement verticale, limitant ainsi les pertes de liquide tout en autorisant une aération du substrat.

Les modules 4 peuvent aussi être pourvus, notamment en l'absence d'orifices traversants 7", de moyens 22' d'accrochage amovible des portions de conduits horizontales 22 au niveau des parois latérales horizontales supérieures 11 desdits modules 4, par exemple sous la forme de moyens de rétention par enclenchement élastique (figure 4B), montés au-dessus des ouvertures 21 desdites parois.

Les modules 4 peuvent également être munis de moyens 27 supplémentaires d'accrochage pour la manipulation dés modules 4 (notamment de grande dimension ou pour leur soulèvement à des hauteurs importantes) au moyen d'une fourche d'un chariot (pourvue de doigts à leurs extrémités). Ces moyens 27 peuvent, par exemple, se présenter sous la forme de deux taquets opposés en regard, rapportés sur les faces internes des parois latérales verticales 10 et 10' et en étant inclinés vers ces dernières (figures 2A et 2B).

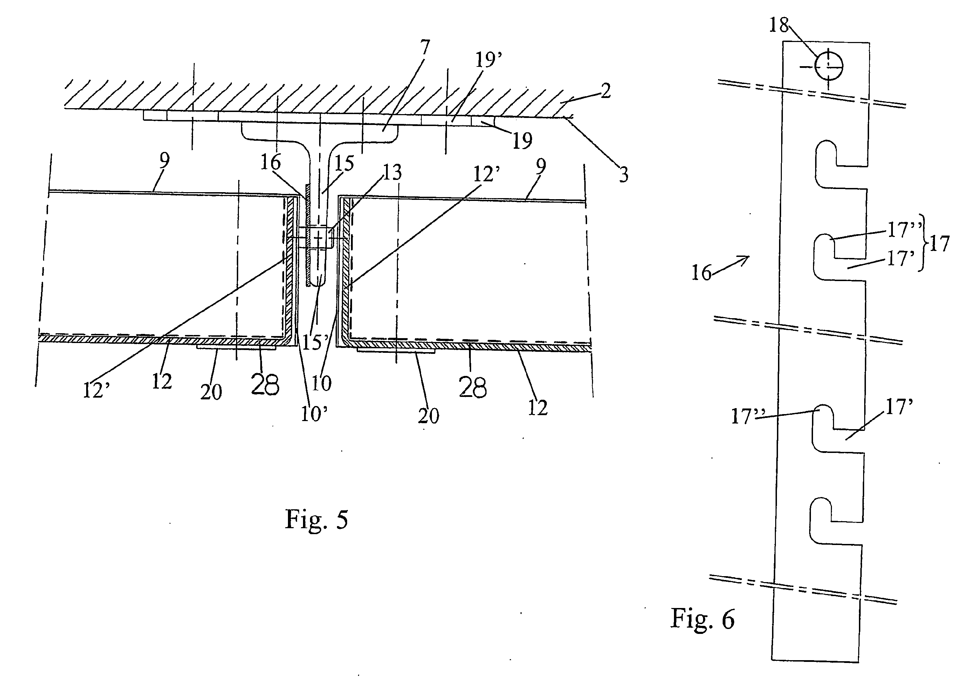

En vue de limiter la perte de substrat 5 au niveau des bords des modules 4, notamment lorsque la paroi ajourée 12 ne comporte pas de bords intérieurs pliés 12' ou que le substrat à une constitution trop fine par rapport au maillage de ladite paroi, il peut être prévu de doubler cette dernière par une deuxième paroi intérieure 28 à maillage plus fin ou plus serré, par exemple en un matériau synthétique souple imputrescible, et pourvue de bords latéraux repliés (en traits interrompus sur la figure 5). La paroi 12 assurera en tout état de cause la rigidité sur la face avant des modules 4.

L'homme du métier notera que la constitution du dispositif selon l'invention permet une mise en oeuvre et un démontage, aussi bien des bacs que de l'irrigation, vraiment aisés.

La possibilité de préculture avant montage sur site permet de limiter les interventions et le suivi après installation, surtout compte tenu de l'utilisation d'un substrat de culture hydrorétenteur et de plantes résistantes et vivaces.

De plus, l'arrosage contrôlé et la récupération du trop d'eau d'arrosage permettent de limiter le coût et l'impact sur l'environnement.

La possibilité de verrouillage permet d'utiliser le dispositif dans des lieux publics.

Le caractère autonome de l'installation peut lui conférer le statut d'élément du mobilier urbain et on peut envisager son emploi comme garde-corps, par exemple.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif de végétalisation de façades ou de murs, principalement constitué, d'une part, par une structure porteuse fixée sur la face de la façade ou du mur à recouvrir, partiellement ou totalement, d'autre part, par au moins deux, préférentiellement une pluralité, de modules à structure plate et à contour carré ou rectangulaire, contenant un substrat de culture et présentant sur l'une de ses grandes faces des éléments de végétation apparents,
ces modules (4) étant montés de manière amovible sur la structure porteuse (7, 19) en masquant sensiblement cette dernière, cette structure porteuse consistant essentiellement en au moins deux rails verticaux (7) espacés sur lesquels les modules (4) sont montés en rangées verticales en étant situés à distance de la façade ou du mur (2) et en étant démontables individuellement,
chaque module (4) se présentant sous la forme d'un bac (8) de constitution générale plate, de forme parallélépipédique, de faible épaisseur par rapport à ses dimensions latérales et avec une paroi de fond (9) et des parois latérales (10, 10', 11, 11') sensiblement pleines et,
la face ouverte du bac (8), qui est opposée au fond (9), étant fermée par une paroi ajourée (12) autorisant le passage des éléments de végétation (6),
dispositif (1) **caractérisé en ce que** la paroi ajourée (12) est appropriée pour retenir le substrat (5) mais laisser passer les plantes (6) et **en ce que** les parois latérales opposées (10 et 10'), orientées verticalement après montage, de chaque bac (8) sont pourvues d'éléments d'accrochage (13) destinés à coopérer avec des sites de réception (14) adaptés présents sur les rails de montage (7), lesdits modules (4) étant montés par simple accrochage entre deux rails (7) parallèles.

2. Dispositif de végétalisation selon la revendication 1, **caractérisé en ce que** les éléments d'accrochage (13) consistent en des goujons ou des doigts rapportés ou formés sur les parois latérales (10 et 10') concernées et **en ce que** les rails verticaux (7) consistent en des profilés comportant une aile (15) pourvue de découpes (14) formant les sites de réception, ces découpes (14) étant débouchantes au niveau de l'arête libre (15') de ladite aile (15) et définissant une position de montage calée sous l'action de la pesanteur pour lesdits modules (4) en position montée.

3. Dispositif de végétalisation selon la revendication 2, **caractérisé en ce que** chaque découpe (14) présente sensiblement une forme de L, avec un segment (14') débouchant de ladite découpe (14) orienté sensiblement horizontalement et avec l'autre segment (14") borgne orienté sensiblement verticalement vers le bas, après fixation du rail (7) considéré sur la façade ou le mur (2), et **en ce que** les goujons ou doigts (13) des deux parois latérales opposées (10 et 10') de chaque bac (8) sont mutuellement décalés dans la direction verticale, considérée en position de montage des modules (4), chaque rail (7) comportant des sites (14) pour la réception des goujons ou doigts (13) de deux rangées verticales adjacentes de modules (4).

4. Dispositif selon l'une quelconque des revendications 2 et 3, **caractérisé en ce que** chaque rail (7) consiste en un profilé en L ou en T et **en ce que** les dispositions relatives, d'une part, des goujons ou doigts (13) au niveau des parois (10, 10') et, d'autre part, des découpes (14) au niveau des ailes (15) d'accrochage des rails (7), sont telles que les arêtes libres (15') desdites ailes (15) sont situées en retrait par rapport à la face frontale apparente des modules (4) après leur montage.

5. Dispositif selon l'une quelconque des revendications 2 à 4, **caractérisé en ce qu'**il comprend, au niveau de chaque rail (7), un moyen de verrouillage à l'état monté des modules (4) sous la forme d'un profilé (16), par exemple un fer plat ou un profilé en U, pourvu de découpes (17) coïncidant respectivement avec celles (14) desdits rails (7), permettant d'engager les goujons ou ergots (13) des modules (4) dans leur état monté et pouvant bloquer ces derniers en position de montage calée.

6. Dispositif selon la revendication 5, **caractérisé en ce que** les découpes (17) de chaque profilé de verrouillage (16) présentent une forme en L, avec un segment débouchant (17') orienté sensiblement horizontalement et avec l'autre segment (17") borgne orienté sensiblement verticalement vers le haut, lorsque ledit profilé (16) est en position montée sur un rail (7), chaque profilé de verrouillage (7) comportant en outre, préférentiellement au niveau de son extrémité supérieure, un perçage (18) pour le passage d'une tige ou barre (18') de blocage en translation, cette dernière traversant également des perforations correspondantes ménagées dans les rails d'accrochage (7).

7. Dispositif selon l'une quelconque des revendications 1 à 6, **caractérisé en ce que** chaque rail (7) est fixé sur la face (3) de la façade ou du mur (2) à recouvrir par l'intermédiaire d'au moins deux plaquettes (19) comportant des orifices traversants oblongs (19') orientés selon la direction horizontale, le rail (7) étant solidarisé avec lesdites plaquettes (19) par soudage ou par vissage ou boulonnage, dans ce dernier cas les vis ou boulons peuvent être disposé(e)s dans des trous oblongs (7') orientés verticalement et ménagés dans ledit rail (7).

8. Dispositif selon l'une quelconque des revendications 1 à 7, **caractérisé en ce que** les bacs plats (8) consistent en des bacs en matière plastique venus de moulage éventuellement de la matière plastique renforcé, au moins une nervure ou paroi de séparation analogue (9') étant formée ou rapportée sur leur paroi de fond (9), en subdivisant ainsi les volumes intérieurs desdits bacs (8) en deux compartiments dans la direction horizontale.

9. Dispositif selon l'une quelconque des revendications 1 à 7, **caractérisé en ce que** les bacs (8) à configuration plate consistent en des bacs métalliques formés d'un seul tenant à partir de portions de tôle galvanisée découpées, pliées et assemblées par soudage au niveau des arêtes de jonction des parois latérales (10, 10', 11, 11'), au moins une nervure ou paroi de séparation analogue (9') étant formée ou rapportée sur leur paroi de fond (9), en subdivisant ainsi les volumes intérieurs desdits bacs (8) en deux compartiments dans la direction horizontale.

10. Dispositif selon l'une quelconque des revendications 1 à 9, **caractérisé en ce que** la paroi ajourée (12) présente une constitution grillagée, par exemple réalisée en métal déployé, et comporte au moins deux bords latéraux (12') pliés situés en regard et à proximité immédiate des faces internes des bords latéraux verticaux (10 et 10') du bac concerné (8) et **en ce que** ladite paroi (12) est assemblée avec ledit bac (8) au moyen de plaquettes ou de rondelles (20) coopérant avec des vis de fixation solidaire de la paroi de fond (9) dudit bac (8).

11. Dispositif selon l'une quelconque des revendications 1 à 10, **caractérisé en ce que** les parois latérales opposées supérieure (11) et inférieure (11') des bacs (8), orientées horizontalement après montage des modules (4), présentent respectivement de profil ou en section transversale une forme concave et une forme convexe vues de l'extérieur, ces formes étant arrondies ou angulaires et ces parois (11 et 11') et, le cas échéant, la ou les nervures ou parois de séparation (9') comportant des perforations (21) pour le passage de liquide.

12. Dispositif selon l'une quelconque des revendications 1 à 11; **caractérisé en ce qu'**il comprend également un réseau d'irrigation comprenant une pluralité de portions de conduit (22) horizontales associées chacune à une rangée horizontale de modules (4) et comportant pour chaque module (4) un ou plusieurs orifices calibrés de déversement ou un ou plusieurs goutteurs (23), répartis longitudinalement le long de la portion considérée, **en ce que** ces portions de conduit horizontales (22) sont soit alimentées par un conduit principal (24) à extension verticale et relié à eux, soit intégrées dans un conduit unique d'un seul tenant.

13. Dispositif selon la revendication 12, **caractérisé en ce que** les portions de conduit horizontales (22) sont logées, préférentiellement de manière amovible, dans des renfoncements profilés horizontaux ménagés dans la paroi de fond des bacs, à proximité de l'extrémité supérieure des modules (4).

14. Dispositif selon la revendication 12, **caractérisé en ce que** les portions de conduit horizontales (22) s'étendent chacune au-dessus des parois latérales supérieures (11) d'une rangée horizontale de modules (4), en étant supportées dans des orifices traversants (7") ménagés dans les rails d'accrochage verticaux (7).

15. Dispositif selon l'une quelconque des revendications 12 à 14, **caractérisé en ce qu'**il comprend, en outre, une gouttière ou un moyen de récupération allongé analogue (25) qui s'étend, le cas échéant, sous l'extrémité inférieure de la dernière rangée horizontale de modules (4).

16. Dispositif selon l'une quelconque des revendications 1 à 15, **caractérisé en ce que** le substrat (5) est essentiellement constitué de granulats en matériau expansé et/ou poreux et à forte rétention hydrique et **en ce que** la végétation (6) est de type tapissante et à faible consommation d'eau.

## Claims

1. Modular greening device for façades or walls, mainly consisting on the one hand of a supporting structure fixed onto the surface of the façade or wall to be partially or totally covered, and on the other hand of at least two and preferably a plurality of modules having a flat structure with square or rectangular contour and containing a culturing substrate and having on one of its large faces elements of visible vegetation,
these modules (4) being mounted in a movable way on the supporting structure (7, 19) while substantially masking the latter, the said supporting structure consisting essentially of at least two vertical rails (7) spaced apart, on which the modules (4) are mounted in vertical rows positioned a distance away from the façade or wall (2) and are able to be taken off individually,
each module (4) having the form of a shallow box (8) with a generally flat and parallelepiped shape whose depth is small relative to its lateral dimensions and having an essentially continuous rear wall (9) and sidewalls (10, 10', 11, 11'), and
the open face of the box (8) opposite the rear wall (9) being covered by a perforated surface (12) that allows the passage of the vegetation elements (6),
the said device (1) being **characterised in that** the perforated surface (12) is able to retain the substrate (5) but lets the plants (6) through, and the opposed sidewalls (10 and 10') of each box (8) that are vertical after assembly are provided with attachment elements (13) designed to co-operate with suitable holders (14) formed on the mounting rails (7), and the said modules are mounted simply by being suspended between two parallel rails (7).

2. Greening device according to Claim 1, **characterised in that** the attachment elements (13) consist of pins or fingers connected to or formed on the sidewalls (10, 10') concerned, and the vertical rails (7) consist of sections having a flange (15) provided with cut-outs (14) that form the said holders, these cut-outs (14) being open at the level of the free edge (15') of the said flange (15) and defining a mounting position in which the said modules (4) in their mounted position are held firmly under the action of gravity.

3. Greening device according to Claim 2, **characterised in that** each cut-out (14) has substantially an L-shape with an open segment (14') of the said cut-out orientated essentially horizontally and with another, blind segment (14") orientated essentially vertically downwards when the rail in question has been fixed onto the façade or wall (2), and the pins or fingers (13) of the two opposed sidewalls (10 and 10') of each box (8) are mutually offset in the vertical direction, considered in the mounting position of the modules (4), so that each rail (7) has holding points (14) for receiving the pins or fingers (13) of two adjacent vertical rows of modules.

4. Device according to either of Claims 2 and 3, **characterised in that** each rail (7) consists of an L-shaped or T-shaped section and the relative arrangements, on the one hand of the pins or fingers (13) on the walls (10, 10') and on the other hand of the cut-outs (14) in the attachment flanges (15) of the rails (7) are such that the free edges (15') of the said flanges (15) are set further back than the visible front face of the modules (4) after mounting.

5. Device according to any of Claims 2 to 4, **characterised in that** at the level of each rail (7) it comprises means for locking the mounted modules (4), in the form of a profiled element (16), for example a flat strip or U-section, which is provided with cut-outs (17) that coincide respectively with the cut-outs (14) of the said rails (7), so enabling the pins or fingers (13) of the module to be engaged in their mounted condition and locked therein when the modules are correctly seated.

6. Device according to Claim 5, **characterised in that** the cut-outs (17) made in each locking profiled element (16) are L-shaped, with an open segment (17') orientated essentially horizontally and with another, blind segment (17") orientated essentially vertically upwards when the said profiled element (16) is in its mounted position on a rail (7), each locking profile (7) also comprising, preferably at its upper end, a hole (18) for the passage of a locking rod or bar (18') to prevent translational movement, the said bar also passing through corresponding perforations made in the attachment rails (7).

7. Device according to any of Claims 1 to 6, **characterised in that** each rail (7) is fixed onto the face (3) of the façade or wall (2) to be covered by means of at least two plates (19) that have oblong through-holes (19') orientated in the horizontal direction, the rail being attached to the said plates (19) by welding or bolting, and in the latter case the screws or bolts can be arranged in oblong holes (7') orientated vertically and formed in the said rail (7).

8. Device according to any of Claims 1 to 7, **characterised in that** the flat boxes (8) consist of boxes made of a plastic material perhaps obtained by moulding the reinforced plastic material, at least one rib or analogous partition (9') being formed or attached on the bottom wall (9), which therefore subdivides the inside volume of the said boxes (8) into two compartments in the horizontal direction.

9. Device according to any of Claims 1 to 7, **characterised in that** the flat boxes (8) consist of metallic boxes formed in one step from pieces of galvanised sheet cut to size, folded and assembled by welding at the level of the adjoining edges of the sidewalls (10, 10', 11, 11'), at least one rib or analogous partition (9') being formed or attached on their bottom wall (9), which therefore subdivides the inside volume of the said boxes (8) into two compartments in the horizontal direction.

10. Device according to any of Claims 1 to 9, **characterised in that** the perforated surface (12) is formed as a grid, for example made of expanded metal, and has at least two folded lateral edges (12') opposite one another and located immediately adjacent to the inside faces of the vertical lateral edges (10, 10') of the box (8) concerned, and the said surface (12) is assembled with the said box (8) by means of plates or washers that co-operate with fixing screws attached on the bottom wall (9) of the said box (8).

11. Device according to any of Claims 1 to 10, **characterised in that** the upper (11) and lower (11') opposite walls of the boxes (8), which are orientated horizontally after the modules (4) have been mounted, have respectively a profile or transverse section of concave and of convex shape towards the outside, these shapes being rounded or angular and the said walls (11 and 11') and, if needs be, the ribs or partitions (9') having perforations (21) for the passage of liquid.

12. Device according to any of Claims 1 to 11, **characterised in that** it also comprises an irrigation network comprising a plurality of horizontal pipe sections (22) each associated with a horizontal row of modules (4) and having for each module (4) one or more calibrated drainage holes or one or more droppers (23), distributed longitudinally along the section considered, these pipe sections being either fed from a main pipe (24) extending vertically and connected to them, or integrated in a single pipe all at once.

13. Device according to Claim 12, **characterised in that** the horizontal pipe sections (22) are held, preferably removably, in horizontal profiled recesses made in the bottom wall of the boxes near the upper end of the modules (4).

14. Device according to Claim 12, **characterised in that** the horizontal pipe sections (22) each extend above the upper sidewalls (11) of a horizontal row of modules (4), and are supported in through-holes (7") made in the vertical mounting rails (7).

15. Device according to any of Claims 12 to 14, **characterised in that** it also comprises a dropper or an analogous elongated recovery means (25) which extends, if necessary, under the lower end of the last horizontal row of modules (4).

16. Device according to any of Claims 1 to 15, **characterised in that** the substrate (5) consists essentially of granules of an expanded and/or porous material with good water-retaining ability, and the vegetation (6) is of the covering type and is **characterised by** low water consumption.

## Patentansprüche

1. Begrünungsvorrichtung für Fassaden oder Wände, hauptsächlich bestehend einerseits aus einer Tragstruktur, die auf der Vorderseite der teilweise oder ganz zu bedeckenden Fassade oder Wand befestigt ist, andererseits aus wenigstens zwei, vorzugsweise einer Vielzahl von Modulen mit flacher Struktur und quadratischer oder rechteckiger Kontur, die ein Kultursubstrat enthält und auf einer ihrer großen Seiten sichtbare Vegetationselemente aufweist,
wobei diese Module (4) beweglich auf der Tragstruktur (7, 19) montiert sind und letztere dabei im Wesentlichen verdecken und die Tragstruktur im Wesentlichen aus wenigstens zwei beabstandeten vertikalen Schienen (7) besteht, auf denen die Module (4) in vertikalen Reihen montiert sind und dabei mit Abstand zu der Fassade oder Wand (2) angeordnet und einzeln demontierbar sind,
wobei jedes Modul (4) in Form einer parallelepipedförmigen Wanne (8) von allgemein flacher Beschaffenheit, von geringer Dicke im Vergleich zu den Seitenabmessungen und mit einer im Wesentlichen massiven Bodenwand (9) und Seitenwänden (10, 10', 11, 11') vorliegt, und
wobei die offene Vorderseite der Wanne (8), die dem Boden (9) gegenüberliegt, durch eine durchbrochene Wand (12) verschlossen ist, die den Durchtritt der Vegetationselemente (6) gestattet,
wobei die Vorrichtung (1) **dadurch gekennzeichnet ist, dass** die durchbrochene Wand (12) geeignet ist, das Substrat (5) zurückzuhalten, aber die Pflanzen (6) hindurchzulassen, und dass die nach der Montage vertikal ausgerichteten, gegenüberliegenden Seitenwände (10 und 10') jeder Wanne (8) mit Einhakelementen (13) versehen sind, die dazu bestimmt sind, mit auf den Montageschienen (7) vorhandenen angepassten Aufnahmeorten (14) zusammenzuwirken, wobei die Module (4) durch einfaches Einhaken zwischen zwei parallelen Schienen (7) montiert sind.

2. Begrünungsvorrichtung nach Anspruch 1, **dadurch gekennzeichnet, dass** die Einhakelemente (13) aus Stiftbolzen oder Zapfen bestehen, die auf die betroffenen Seitenwände (10 und 10') aufgesetzt oder daran ausgebildet sind, und dass die vertikalen Schienen (7) aus Profilen mit einem Flügel (15) bestehen, der mit die Aufnahmeorte bildenden Ausschnitten (14) versehen ist, wobei diese Ausschnitte (14) auf Höhe der freien Kante (15') des Flügels (15) geöffnet sind und in Befestigungsstellung unter Einwirkung des Gewichtes eine stabile Einbaustellung für die Module (4) definieren.

3. Begrünungsvorrichtung nach Anspruch 2, **dadurch gekennzeichnet, dass** nach Befestigung der betreffenden Schiene (7) auf der Fassade oder Wand (2) jeder Ausschnitt (14) im Wesentlichen eine L-Form vorweist, mit einem Segment (14'), das sich von dem Ausschnitt (14) weg im Wesentlichen horizontal ausgerichtet öffnet, und mit dem anderen Blindsegment (14") im Wesentlichen vertikal nach unten ausgerichtet, und dass die Stiftbolzen oder Zapfen (13) der zwei gegenüberliegenden Seitenwände (10 und 10') jeder Wanne (8) in Einbaustellung der Module (4) in vertikaler Richtung gesehen gegenseitig versetzt sind, wobei jede Schiene (7) Plätze (14) zur Aufnahme der Stiftbolzen oder Zapfen (13) von zwei benachbarten vertikalen Reihen von Modulen (4) aufweist.

4. Vorrichtung nach einem der Ansprüche 2 und 3, **dadurch gekennzeichnet, dass** jede Schiene (7) aus einem L-Profil oder einem T-Profil besteht und dass die relativen Anordnungen einerseits der Stiftbolzen oder Zapfen (13) auf Höhe der Wände (10, 10') und andererseits der Ausschnitte (14) auf Höhe der Einhakflügel (15) der Schienen (7) derart sind, dass die freien Kanten (15') der Flügel (15) nach ihrer Montage in Bezug auf die sichtbare Stirnseite der Module (4) zurückgesetzt angeordnet sind.

5. Vorrichtung nach einem der Ansprüche 2 bis 4, **dadurch gekennzeichnet, dass** sie im montierten Zustand der Module (4) auf Höhe jeder Schiene (7) ein Verriegelungsmittel in Form eines Profils (16) umfasst, z. B. ein Flacheisen oder ein U-Profil, das mit Ausschnitten (17) versehen ist, die jeweils mit denen (14) der Schienen (7) zusammenfallen, wobei sie im montierten Zustand einen Eingriff mit den Stiftbolzen oder Vorsprüngen (13) der Module (4) erlauben und die letzteren in stabiler Einbaustellung arretieren können.

6. Vorrichtung nach Anspruch 5, **dadurch gekennzeichnet, dass** die Ausschnitte (17) jedes Verriegelungsprofils (16) eine L-Form aufweisen, mit einem Segment (17'), das sich im Wesentlichen horizontal ausgerichtet öffnet, und mit dem anderen Blindsegment (17") im Wesentlichen vertikal nach oben ausgerichtet, wenn das Profil (16) in Befestigungsstellung auf einer Schiene (7) ist, wobei jedes Verriegelungsprofil (7) außerdem vorzugsweise auf Höhe seines oberen Endes eine Bohrung (18) für den Durchtritt eines Verschiebungssperrstiftes oder einer Verschiebungssperrstange (18') aufweist, wobei letztere(r) auch durch entsprechende Durchbrüche hindurchgeht, die in den Einhakschienen (7) ausgespart sind.

7. Vorrichtung nach einem der Ansprüche 1 bis 6, **dadurch gekennzeichnet, dass** jede Schiene (7) auf der Vorderseite (3) der zu bedeckenden Fassade oder Wand (2) mittels wenigstens zweier Platten (19) befestigt ist, die in horizontaler Richtung ausgerichtete längliche Durchtrittsöffnungen (19') aufweisen, wobei die Schiene (7) und die Platten (19) durch Schweißung oder durch Schraub- oder Bolzenverbindung aneinander befestigt sind, wobei im letzteren Fall die Schrauben oder Bolzen in den vertikal ausgerichteten und ausgesparten Langlöchern (7') in der Schiene (7) angeordnet sein können.

8. Vorrichtung nach einem der Ansprüche 1 bis 7, **dadurch gekennzeichnet, dass** die flachen Wannen (8) aus Kunststoff-Formwannen, ggf. mit gussverstärktem Kunststoff, bestehen, wobei wenigstens eine analoge Rippe oder Trennwand (9') auf deren Bodenwand (9) ausgebildet oder aufgesetzt ist und so die Innenräume der Wannen (8) in horizontaler Richtung in zwei Abteile unterteilt.

9. Vorrichtung nach einem der Ansprüche 1 bis 7, **dadurch gekennzeichnet, dass** die flach ausgeführten Wannen (8) aus Metallwannen bestehen, die in einem Stück aus gestanzten, umgelegten und durch Schweißen auf Höhe der Stoßkanten der Seitenwände (10, 10', 11, 11') zusammengefügten Teilen von verzinktem Blech geformt sind, wobei wenigstens eine analoge Rippe oder Trennwand (9') auf deren Bodenwand (9) ausgebildet oder aufgesetzt ist und so die Innenräume der Wannen (8) in horizontaler Richtung in zwei Abteile unterteilt.

10. Vorrichtung nach einem der Ansprüche 1 bis 9, **dadurch gekennzeichnet, dass** die durchbrochene Wand (12) einen beispielsweise in Streckmetall ausgeführten Gitteraufbau aufweist und wenigstens zwei umgelegte Seitenkanten (12') beinhaltet, die gegenüber und in unmittelbarer Nähe der Innenseiten der vertikalen Seitenkanten (10 und 10') der betroffenen Wanne (8) angeordnet sind und dass die Wand (12) mit der Wanne (8) mittels Platten oder Scheiben (20) zusammengefügt ist, die mit Gegenbefestigungsschrauben der Bodenwand (9) der Wanne (8) zusammenwirken.

11. Vorrichtung nach einem der Ansprüche 1 bis 10, **dadurch gekennzeichnet, dass** die nach Montage der Module (4) horizontal ausgerichteten, gegenüberliegenden oberen (11) und unteren Seitenwände (11') der Wannen (8) von außen gesehen jeweils im Profil oder Querschnitt eine konkave Form und eine konvexe Form aufweisen, wobei diese Formen abgerundet oder winkelig sind und die Wände (11 und 11') und ggf. die Rippe(n) oder Trennwände (9') Durchbrüche (21) für den Durchtritt von Flüssigkeit beinhalten.

12. Vorrichtung nach einem der Ansprüche 1 bis 11, **dadurch gekennzeichnet, dass** sie auch ein Bewässerungsnetz umfasst, das eine Vielzahl von horizontalen Rohrleitungsabschnitten (22) umfasst, die jeweils einer horizontalen Reihe von Modulen (4) zugeordnet sind, und für jedes Modul (4) eine oder mehrere kalibrierte Austragsöffnungen oder einen oder mehrere Tröpfler (23) aufweist, die längs der Länge des betreffenden Abschnitts verteilt sind, wobei diese horizontalen Rohrleitungsabschnitte (22) entweder durch eine sich vertikal erstreckende und damit verbundene Hauptleitung (24) gespeist sind oder in einer eigenen Leitung in einem Stück integriert sind.

13. Vorrichtung nach Anspruch 12, **dadurch gekennzeichnet, dass** die horizontalen Rohrleitungsabschnitte (22) vorzugsweise beweglich in horizontalen Vertiefungsprofilen gelagert sind, die in der Bodenwand der Wannen in der Nähe des oberen Endes der Module (4) ausgespart sind.

14. Vorrichtung nach Anspruch 12, **dadurch gekennzeichnet, dass** sich die horizontalen Rohrleitungsabschnitte (22) jeweils über obere Seitenwände (11) einer horizontalen Reihe von Modulen (4) erstrecken und dabei in Durchtrittsöffnungen (7") eingesteckt sind, die in den vertikalen Einhakschienen (7) ausgespart sind.

15. Vorrichtung nach einem der Ansprüche 12 bis 14, **dadurch gekennzeichnet, dass** sie außerdem eine Rinne oder ein analoges langgestrecktes Rückgewinnungsmittel (25) umfasst, dass sich ggf. unter dem unteren Ende der letzten horizontalen Reihe von Modulen (4) erstreckt.

16. Vorrichtung nach einem der Ansprüche 1 bis 15, **dadurch gekennzeichnet, dass** das Substrat (5) im Wesentlichen aus Granulaten aus expandiertem und/oder porösem Material und mit starker Wasserretention besteht und dass die Vegetation (6) teppichartig und von geringem Wasserverbrauch ist.
